# EUROPÄISCHE PATENTANMELDUNG

(11) **EP 3 040 202 A1**
(43) Veröffentlichungstag der Anmeldung: **06.07.2016**
(21) Anmeldenummer: 15194766.0
(22) Anmeldetag: 16.11.2015
(51) Int. Cl.: B32B 37/14, B30B 5/02, B32B 37/00, B32B 37/10

(54) **PRESSE ZUM LAMINIEREN VON PHOTOVOLTAIKMODULEN SOWIE MEMBRAN FÜR EINE SOLCHE**

(30) Priorität: 18.12.2014 DE 102014119072
(71) Anmelder: Robert Bürkle GmbH, 72250 Freudenstadt (DE)
(72) Erfinder: Gaiser, Robert, 72270 Baiersbronn (DE); Müller, Christoph, 72270 Baiersbronn (DE); Klaus, Daniel, 72250 Freudenstadt (DE); Renz, Wolfgang, 72250 Freudenstadt (DE)
(74) Vertreter: Lemcke, Brommer & Partner Patentanwälte Partnerschaft mbB

(57) **Zusammenfassung**

Die vorliegende Erfindung betrifft eine Membran 11 für eine Presse zum Laminieren von Photovoltaikmodulen 1. Die Membran 11 besteht aus einem Schichtenverbund mit biegeweichen Eigenschaften, der mindesten eine erste Schicht aus einem Gewebe sowie eine zweite, gasdichte Schicht enthält, wobei der Schichtenverbund einen negativen thermischen Ausdehnungskoeffizienten aufweist.

Die Erfindung betrifft ferner eine Presse zum Laminieren von Photovoltaikmodulen 1 unter Druck- und Wärmeeinwirkung mit einer solchen Membran 11.

## Beschreibung

Die vorliegende Erfindung betrifft eine Membran für eine Presse zum Laminieren von Photovoltaikmodulen unter Druck- und Wärmeeinwirkung nach dem Oberbegriff des Anspruchs 1 sowie eine Presse zum Laminieren von Photovoltaikmodulen unter Druck- und Wärmeeinwirkung nach dem Oberbegriff des Anspruchs 9.

Eine Presse der vorliegenden Art umfasst demnach eine untere Pressenhälfte und eine obere Pressenhälfte, welche relativ zueinander bewegbar sind, um die Presse zu öffnen und zu schließen. Die untere Pressenhälfte und die obere Pressenhälfte bilden in geschlossenem Zustand mittels umlaufender Dichtungen eine Vakuumkammer, innerhalb der ein oder mehrere, aus einem Schichtstapel bestehende Werkstücke zu Photovoltaikmodulen laminiert werden.

Eine flexible Membran teilt die Vakuumkammer in einen zur Aufnahme mindestens eines Werkstücks vorgesehenen, evakuierbaren Produktraum und einen evakuierbaren und/oder druckbeaufschlagbaren Druckraum. Aufgrund eines durch Evakuieren des Produktraums und/oder durch Druckbeaufschlagen des Druckraums erzeugten Druckunterschieds in der Vakuumkammer wird die Membran gegen das Werkstück gepresst, wodurch sie das Werkstück direkt oder indirekt gegen eine Unterseite der Vakuumkammer drückt und hierdurch die zum Laminieren notwendige Auflast auf das Werkstück aufbringt. In der Regel wird die Unterseite der Vakuumkammer durch eine Heizplatte gebildet, so dass die zum Laminieren notwendige Prozesswärme direkt beim Pressvorgang in das Werkstück eingeleitet wird. Es sind jedoch auch andere Arten des Einbringens der Prozesswärme möglich.

Photovoltaikmodule, die mit einer Presse der vorliegenden Art hergestellt bzw. laminiert werden, bestehen üblicherweise aus einer Solarzellenschicht, die mitsamt ihren elektrischen Kontaktierungselementen zwischen eine Glasplatte und eine wetterfeste Folie oder zwischen zwei Glasplatten angeordnet und mittels einer oder mehrerer Kleberschichten mit den Glasplatten bzw. Folien laminiert und hierdurch feuchtigkeitsdicht sowie wetterfest in einen lichtdurchlässigen Verbund eingekapselt wird.

Um nun ein Werkstück bzw. mehrere Werkstücke gleichzeitig - der Einfachheit halber wird im Folgenden jeweils nur von einem Werkstück gesprochen - zu laminieren, wird dieses in den Produktraum der Vakuumkammer verbracht und die Vakuumkammer geschlossen. Sodann wird normalerweise zunächst der Druckraum der Vakuumkammer evakuiert, um die Membran nach oben zur oberen Kammerhälfte zu ziehen. Danach, üblicherweise mit einem gewissen Zeitversatz, wird auch der Produktraum evakuiert, wobei das Evakuieren beider Räume der Vakuumkammer so geregelt wird, dass immer ein Differenzdruck zwischen dem Druckraum und dem Produktraum bestehen bleibt, der die Membran in der oberen Kammerhälfte hält und verhindert, dass die Membran vorzeitig in Kontakt mit dem Werkstück gelangt.

Wenn der Produktraum der Pressenkammer bis zu einem Solldruck evakuiert worden ist, der in der Regel unterhalb von 1 mbar liegt, wird der Druckraum belüftet, so dass sich die Druckdifferenz zwischen dem Druckraum und dem Produktraum umkehrt und sich die Membran auf das Werkstück auflegt. Durch Regeln des Drucks im Druckraum wird sodann ein gewünschter Anpressdruck der Membran eingestellt, um die für das Laminieren notwendige Auflast auf das Werkstück zu erzeugen.

Die für den Laminiervorgang notwendige Prozesswärme, typischerweise bis zu 200°C, wird üblicherweise dadurch in das Werkstück eingebracht, dass die Unterseite der Vakuumkammer als Heizplatte ausgebildet ist, gegen die das Werkstück durch die Membran gedrückt wird. Der Druck und die Prozesswärme sorgen dann zusammen für das Erweichen bzw. Aktivieren der Kleberschicht und gegebenenfalls für deren Aushärten bzw. Vernetzen.

Das rasche Evakuieren insbesondere des Produktraums der Vakuumkammer - möglichst noch vor einem nennenswerten Erwärmen des Werkstücks - ermöglicht, dass etwaige Lufteinschlüsse (Legeluft zwischen den Werkstückschichten) oder gegebenenfalls beim Erwärmen gebildete Gase aus dem Werkstück herausgezogen werden, bevor ein Härten bzw. Vernetzen des Klebers in der Kleberschicht beginnt. Denn Gasblasen im fertig laminierten Photovoltaikmodul beeinträchtigen dessen Lebensdauer ganz erheblich oder führen im ungünstigsten Fall zur sofortigen Unbrauchbarkeit des Moduls, also zur Produktion von Ausschuss.

Eine Membran der vorliegenden Art, die in Pressen zum Laminieren von Photovoltaikmodulen verwendet wird und beispielsweise aus der DE 103 16 774 A1 bekannt ist, besteht herkömmlicherweise aus einem hochelastischen Material mit einer Elastizität bzw. Reißdehnung von 200 bis 600 %, und zwar zumeist aus Silikon, oder in der Minderzahl der Anwendungsfälle aus Naturkautschuk, also einem hochelastischen und weichen Werkstoff mit einer Shore-Härte < 58, meist < 50. Denn die ganz überwiegende Mehrheit von Photovoltaikmodulen enthält eine Solarzellenschicht mit Solarzellen, die aus kristallinen Siliziumwafern hergestellt sind und meist nicht mehr als 0,1 bis 0,2 mm Materialstärke aufweisen. Dementsprechend sind sie sehr bruchempfindlich.

Der Aufbau dieser Module besteht hierbei oft aus einem Verbund aus einem Glassubstrat, einer ersten EVA-Kleberfolie, der Solarzellenschicht, einer zweiten EVA-Kleberfolie und einer Rückseitenfolie. Die hochelastischen Eigenschaften der Membrane sind bei solchen Modulen auch deswegen wichtig, weil die Membran alle im Modulaufbau vorhandenen Unebenheiten unter der Rückseitenfolie, insbesondere diejenigen zwischen den einzelnen Silizium-Solarzellen und deren Verschaltung, ausgleichen soll.

Mit herkömmlichen hochelastischen Membranen aus Silikonkautschuk oder aus Naturkautschuk können allerdings in der Regel lediglich Standzeiten von wenigen Tausend Pressenzyklen erzielt werden. Neben mechanischen Einflüssen sind hierfür hauptsächlich die Reaktanten, die von der in Photovoltaikmodulen normalerweise verwendeten Kleberfolie aus EVA beim Laminierprozess freigesetzt werden, insbesondere Peroxide und Essigsäure verantwortlich.

Herkömmliche hochelastische Membrane erzielen darüber hinaus nicht immer optimale Ergebnisse in einer Presse, in der Photovoltaikmodule laminiert werden: Beim Belüften des Druckraums in der geschlossenen Presse legt sich die Membran auf das Werkstück auf, um die zum Laminieren erforderliche Auflast aufzubringen. An den Stellen des ersten Kontakts mit dem Werkstück haftet die Membran aufgrund eines Reibschlusses der gummiartigen Oberfläche des Silikonkautschuks oder Naturkautschuks nahezu unverrückbar auf dem Werkstück. Jede weitere Membranbewegung zum Werkstück hin erzeugt in der Membran daraufhin lokale Dehnungen, so dass die Auflast im Ergebnis nicht gleichmäßig auf dem Photovoltaikmodul verteilt wird. Eine für die Produktqualität erwünschte isobare Druckverteilung bis zum Rand bzw. den Kanten des Photovoltaikmoduls kann so oft nicht gewährleistet werden. Darüber hinaus können sich in engen Zwischenräumen zwischen den einzelnen Solarzellen drucklose Bereiche ausbilden, in denen demzufolge unzureichend laminiert wird.

Herkömmliche hochelastische Membrane legen sich ferner beim Belüften der Druckkammer der Presse sofort allseitig an die Kanten des Werkstücks an, wodurch der noch nicht laminierte Schichtstapel und dessen Zwischenräume umlaufend gasdicht abgedichtet werden. Etwa noch vorhandene Restluft sowie Gase, die beim Laminieren entstehen, können dann nicht mehr aus dem Schichtstapel entweichen und verbleiben im Modul, wo sie dessen Qualität beeinträchtigen können.

Schließlich zeigen herkömmliche hochelastische Membrane ein ausgeprägtes Verschleißverhalten, wenn sie mehrmalig aufgeheizt und abgekühlt werden. Hochelastische Membrane müssen daher in der Regel auf möglichst konstanter Temperatur gehalten werden.

Um die geschilderten Probleme von herkömmlichen hochelastischen Membranen zu lösen, ist in der DE 10 2009 020 991 A1 vorgeschlagen worden, als Membran für eine Presse zum Laminieren von Photovoltaikmodulen ein Gewebe oder eine Folie mit gasdichten und biegeweichen, jedoch zugstabilen und somit quasi unelastischen Eigenschaften zu verwenden, beispielsweise ein kaum dehnbares Aramid-Gewebe mit einer produktseitigen reibungsarmen Beschichtung aus PTFE und einer rückseitigen Auflage mit einer gasundurchlässigen, gummiartigen Schicht.

Mit einer quasi unelastischen Membran sind viele Probleme der herkömmlichen hochelastischen Membrane beseitigt. Allerdings ist es notwendig, die qasi unelastische Membran zum Produktraum der Presse hin mit einer reibungsvermindernden Beschichtung zu versehen. Denn ansonsten ist zu beobachten, dass die Membran während des Laminierens an den Rändern des Werkstücks einen Wulst bildet, so dass das Modul an seinen äußeren Kanten nur unzureichend laminiert wird. Da Photovoltaikmodule in der Regel im Freien aufgestellt werden, ist ein vollständiges Laminieren gerade an den Modulkanten jedoch von größter Wichtigkeit, um das Eindringen von Feuchtigkeit in das Modul langzeitstabil zu verhindern.

Ein mit reibungsverminderndem PTFE beschichtetes Aramid- oder Glasfasergewebe neigt allerdings unter Wärmeeinfluss zur Faltenbildung. Es lässt sich darüber hinaus auch nur schwer spannen oder unter Spannung halten, um die Faltenbildung zu vermeiden.

Der vorliegenden Erfindung liegt daher die Aufgabe zugrunde, eine Presse zum Laminieren von Photovoltaikmodulen der eingangs genannten Art sowie eine Membran für eine solche Presse vorzuschlagen, die die Probleme einer herkömmlichen hochelastischen Membran vermeidet und dennoch ohne eine spezi0000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000000 elle, reibungsvermindernde Beschichtung der Membran auskommt um gute Laminierergebnisse zu erzielen.

Gelöst ist diese Aufgabe durch eine Membran mit den Merkmalen des Patentanspruchs 1 sowie durch eine Presse mit den Merkmalen des Patentanspruchs 9.

Bevorzugte Ausgestaltungen der erfindungsgemäßen Membran finden sich in den Patentansprüchen 2 bis 8; bevorzugte Weiterbildungen der erfindungsgemäßen Presse sind in den Patentansprüchen 10 bis 12 niedergelegt.

Eine Membran nach der vorliegenden Erfindung besteht demnach aus einem Schichtenverbund mit biegeweichen Eigenschaften, der mindestens eine erste Schicht aus einem Gewebe sowie eine zweite, gasdichte Schicht enthält, und zeichnet sich dadurch aus, dass der Schichtenverbund einen negativen thermischen Ausdehnungskoeffizienten aufweist. Die erfindungsgemäße Presse zeichnet sich dadurch aus, dass sie eine solche Membran enthält.

Der thermische Ausdehnungskoeffizient im Sinne der vorliegenden Erfindung ist ein Längenausdehnungskoeffizient in mindestens einer Raumrichtung in der Ebene der Membran und bezieht sich auf einen Temperaturbereich, der in einer Presse zum Laminieren von Photovoltaikmodulen üblicherweise herrscht, also zwischen etwa Raumtemperatur und etwa 180°C bis 200°C.

Aufgrund des negativen thermischen Ausdehnungskoeffizienten zieht sich die erfindungsgemäße Membran bei Erwärmung zusammen. Hierdurch wird das oben beschriebene Problem vermieden, dass sich - bei fehlender reibungsvermindernder Beschichtung - im Randbereich des Photovoltaikmoduls bzw. des zu laminierenden Schichtstapels ein Wulst in der Membran bildet. Denn dieser Wulst wird maßgeblich dadurch hervorgerufen, dass sich die Membran beim Auflegen auf den Schichtstapel erwärmt und hierbei üblicherweise ausdehnt. Eine Membran mit negativem thermischen Ausdehnungskoeffizienten weist dieses problematische Verhalten nicht auf.

Ein besonders vorteilhafter Effekt bei der Verwendung der erfindungsgemäßen Membran mit negativem thermischen Ausdehnungskoeffizienten ergibt sich bei der erfindungsgemäßen Presse dadurch, dass darauf verzichtet werden kann, die Membran in der Presse zu spannen. Insbesondere die herkömmlichen hochelastischen Membrane, jedoch auch die bekannten quasi-unelastischen Membrane mussten in Pressen zum Laminieren von Photovoltaikmodulen mit Spannvorrichtungen versehen werden, um sie beim Aufwärmen der Presse auf Prozesstemperatur nachspannen zu können. Dies bedingt sowohl kostenträchtige Spannvorrichtungen oder Spannelemente an der Presse als auch einen erheblichen Mehraufwand beim Aus- und Einbau einer verschlissenen bzw. neuen Membran. Darüber hinaus beeinträchtigt das Spannen die Lebensdauer der Membran.

Die erfindungsgemäße Membran mit negativem thermischen Ausdehnungskoeffizienten kann demgegenüber relativ locker in die obere Pressenhälfte eingebaut oder schlicht eingehängt werden, beispielsweise nur an zwei Seiten, was besonders dann zweckmäßig ist, wenn ein bezüglich des Ausdehnungskoeffizienten anisotropes Material verwendet wird. Beim Erwärmen der Presse und der Membran auf Prozesstemperatur spannt sich die Membran dann selbst, so dass zum einen ein gleichmäßiges, großflächiges Auflegen der Membran auf das zu laminierende Photovoltaikmodul gewährleistet ist und zum anderen jede Faltenbildung auf dem Modul verhindert wird.

Im Rahmen der vorliegenden Erfindung ist es nicht notwendig, dass die Membran aus einem Schichtenverbund besteht, der zugstabile und hierdurch quasiunelastische Eigenschaften aufweist; es ist jedoch bevorzugt, dass die erfindungsgemäße Membran keine herkömmlichen, hochelastischen Eigenschaften besitzt. Hierbei liegt die Reißdehnung des Schichtenverbundes der Membran vorzugsweise unter 60%, weiter vorzugsweise unter 50% und besonders bevorzugt unter 25%.

Das Gewebe ist vorzugsweise aus Polyamidfasern gefertigt, und die gasdichte zweite Schicht des Schichtverbunds der erfindungsgemäßen Membran besteht vorzugsweise aus Fluorkautschuk (FKM).

Im Rahmen der vorliegenden Erfindung kann das Gewebe auch beidseits mit einer gasdichten Schicht, beispielsweise FKM versehen sein.

Im Rahmen der vorliegenden Erfindung ist es ferner bevorzugt, wenn der Schichtverbund der Membran eine Materialstärke von weniger als 1 mm, vorzugsweise von weniger als 0,3 mm besitzt. Hierdurch ergibt sich der besondere Vorteil, dass die Membran nur eine geringe eigene Wärmekapazität aufweist und negative Effekte im Laminierprozess wegen einer signifikanten Wärmeaufnahme durch die Membran unterbleiben. Des Weiteren schmiegt sich die Membran durch die geringe Materialstärke besser an Unebenheiten im Photovoltaikmodul an, insbesondere wenn dieses mit einer Rückseitenfolie versehen ist. Auch an der Modulkante und am Modulrand ergeben sich Vorteile durch die besonders dünne Membran: Die gewünschte isobare Druckverteilung kann so leichter erzielt werden.

Der negative thermische Ausdehnungskoeffizient der Membran beträgt vorzugsweise zwischen -0,5 * 10^-4 und -1,5 * 10^-4 [1/K], vorzugsweise ca. -1,0 * 10^-4 bis ca. -1,1 * 10^-4 [1/K].

Bei einer erfindungsgemäßen Presse ist die Membran vorzugsweise ohne Spanneinrichtungen in die obere Pressenhälfte eingehängt, um alle Vorteile der vorliegenden Erfindung zu realisieren: Aufgrund des negativen thermischen Ausdehnungskoeffizienten der Membran erübrigt sich ein Spannen derselben. Besonders bevorzugt ist es, wenn die Membran nur an zwei gegenüberliegenden Seiten in die obere Pressenhälfte eingehängt ist. Hierdurch verringert sich der Aufwand bei einem etwa notwendigen Wechsel der Membran nochmals.

Wie an sich bekannt, kann die Membran auch bei einer erfindungsgemäßen Presse zwischen einer oberen Hälfte und einer unteren Hälfte eines zweiteiligen Membranrahmens befestigt sein, der in die obere Pressenhälfte einsetzbar und aus dieser entnehmbar ist. Auch hier erübrigt sich eine Montage der Membran unter Spannung oder ein Nachspannen im Membranrahmen.

Ein Ausführungsbeispiel für eine erfindungsgemäß ausgestaltete Presse wird im Folgenden anhand der beigefügten Zeichnungen beschrieben und erläutert. Es zeigen:
- Figur 1: eine schematische Schnittdarstellung einer erfindungsgemäß ausgestalteten Presse, quer zur Durchlaufrichtung, in geöffnetem Zustand;
- Figur 2: eine Darstellung wie Figur 1, jedoch in geschlossenem Zustand,
- Figur 3: eine Darstellung wie Figur 1, jedoch während des eigentlichen Laminierprozesses.

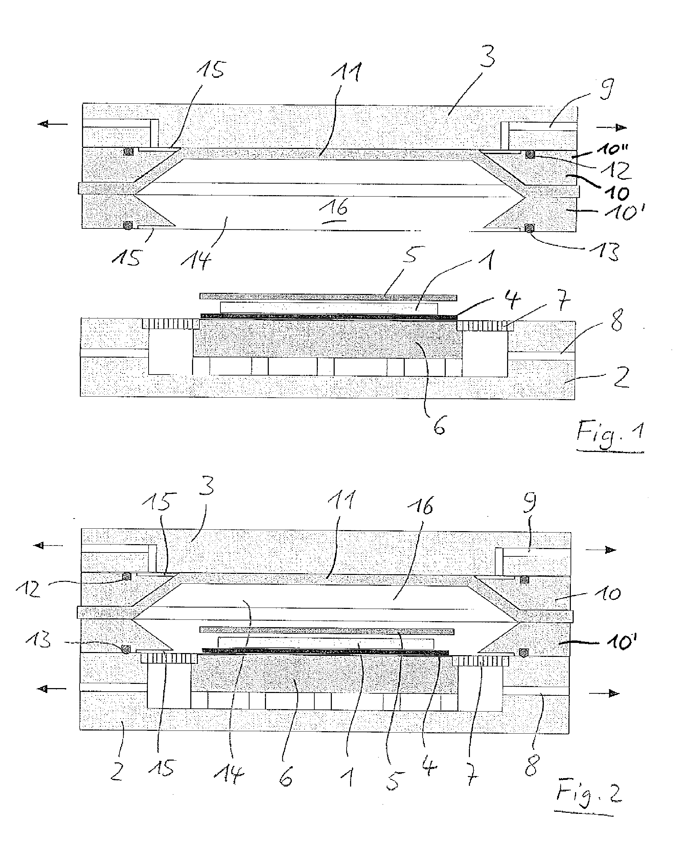

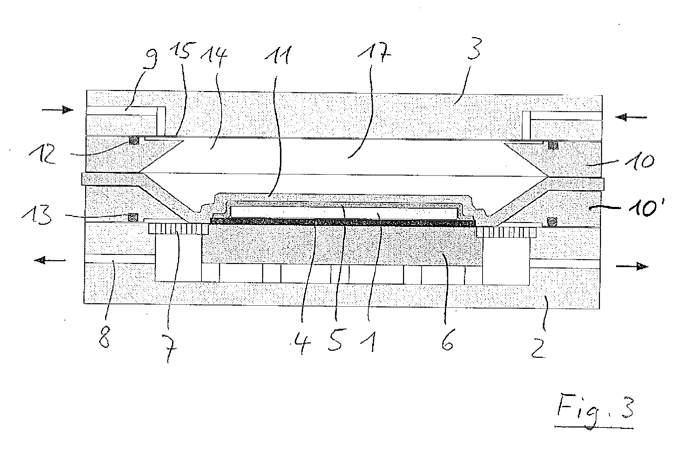

Die Figuren 1, 2 und 3 zeigen schematisch eine Schnittdarstellung durch eine erfindungsgemäß ausgestaltete Presse zum Laminieren eines Photovoltaikmoduls 1, wobei die Durchlaufrichtung des Photovoltaikmoduls 1 senkrecht zur Zeichenebene liegt, und wobei Figur 1 eine geöffnete Presse beim Beschicken, Figur 2 eine geschlossene Presse beim Evakuieren und Figur 3 eine geschlossene Presse beim eigentlichen Laminiervorgang zeigt.

In der Presse, die aus einer unteren Pressenhälfte 2 und einer oberen Pressenhälfte 3 gebildet ist, ist ein Photovoltaikmodul 1 bzw. ein Schichtstapel, der zu einem Modul laminiert werden soll, zwischen einem Förderband 4 und einer Trennfolie 5 angeordnet. Das Förderband 4 liegt auf der unteren Pressenhälfte 2 auf, die in diesem Bereich eine Heizplatte 6 aufweist, um die benötigte Prozesswärme in das Photovoltaikmodul 1 einzubringen. In Durchlaufrichtung gesehen seitlich neben der Heizplatte 6 befinden sich in der unteren Pressenhälfte 2 mehrere Absaugöffnungen 7, die in unteren Kanälen 8 münden. Die unteren Kanäle 8 sind mit (hier nicht dargestellten) Evakuierungs- und Belüftungsmitteln verbunden. Das Transportband 4 dient dazu, das Photovoltaikmodul 1 in die Presse einzubringen und aus dieser wieder herauszufördern, so dass es die Presse senkrecht zur Zeichenebene durchgreift.

Die obere Pressenhälfte 3 ist mit oberen Kanälen 9 zum Evakuieren, Belüften oder Druckbeaufschlagen versehen, und sie trägt einen zweiteiligen Membranrahmen 10, zwischen dessen oberer Rahmenhälfte 10" und unterer Rahmenhälfte 10' eine Membran 11 geklemmt ist. Der Membranrahmen 10 bildet mit oberen 12 und unteren, umlaufenden Dichtungen 13, die jeweils gegen die obere Pressenhälfte 3 und die untere Pressenhälfte 2 abdichten, eine mehrteilige Dichtung zum gasdichten Verschließen der Presse, wobei er in seinem Inneren, zusammen mit den angrenzenden Pressenhälften 2, 3, eine Vakuumkammer 14 umschreibt. Mittels Aussparungen 15 steht die Vakuumkammer 14 mit den unteren und oberen Kanälen 8, 9 in Verbindung. Die Membran 11 teilt die Vakuumkammer 14 hierbei gasdicht in einen unterhalb der Membran liegenden Produktraum 16, der mit den unteren Kanälen 8 in Verbindung steht, und in einen oberhalb der Membran 11 liegenden Druckraum 17, der mit den oberen Kanälen 9 verbunden ist.

In einer alternativen Ausführungsform (nicht dargestellt) kann auch ein einteiliger Membranrahmen 10 verwendet werden; die untere Rahmenhälfte 10' entfällt in diesem Fall.

Figur 1 zeigt nun die Phase, in der der Schichtstapel, der das Photovoltaikmodul 1 werden soll, auf dem Transportband 4 mit aufliegender Trennfolie 5 in den Bereich der Vakuumkammer 14 in die Presse eingefahren worden ist; die Presse ist hierbei noch geöffnet. Um die Membran 11 vor mechanischen Beschädigungen zu schützen, wird sie über die oberen Kanäle 9 an die obere Pressenhälfte 3 angesaugt. Dies ist im Rahmen der vorliegenden Erfindung allerdings nicht notwendig.

Durch Absenken der oberen Pressenhälfte 3 wird die Presse sodann geschlossen, wie Figur 2 zeigt. Über die oberen Kanäle 9 und die unteren Kanäle 8 wird die Vakuumkammer 14 evakuiert, wobei allerdings darauf geachtet wird, dass der Druck oberhalb der Membran 11 geringer ist, als derjenige unterhalb der Membran 11, so dass die Membran 11 nach oben zur oberen Pressenhälfte 3 hin gezogen bleibt. Hierdurch ist in Figur 2 lediglich der Produktraum 16 sichtbar, jedoch nicht der Druckraum 17. Wenn die Membran 11 im vorhergehenden Verfahrensschritt nicht nach oben zur oberen Pressenhälfte 3 gezogen wurde, werden der Produktraum 16 und der Druckraum 17 gleichzeitig evakuiert, ohne eine Druckdifferenz zu erzeugen. Hierbei bleibt die Membran 11 unverändert vom Schichtstapel 1 beabstandet.

Nachdem der Produktraum 16 bis auf einen Enddruck von etwa 1 mbar evakuiert worden ist, wird der Druckraum 17 über die oberen Kanäle 9 belüftet, so dass sich die in Figur 3 gezeigte Situation ergibt. Die Membran 11 legt sich aufgrund des herrschenden Druckunterschieds auf den Schichtstapel 1 auf und presst diesen gegen die Heizplatte 6. Die Trennfolie 5 verhindert hierbei einen direkten Kontakt der Membran 11 mit dem Schichtstapel bzw. Photovoltaikmodul 1, so dass dort etwa austretender Klebstoff nicht an die Membran 11 gelangen kann. Die in Figur 3 gezeigte Phase ist die eigentliche Laminierphase, in der das Photovoltaikmodul 1 mittels der Membran 11 zusammengepresst wird, während es von der Heizplatte 6 durch das Transportband 4 hindurch mit Wärme beaufschlagt wird.

Die im vorliegenden Ausführungsbeispiel verwendete Membran 11 besteht aus einem zweischichtigen Schichtverbund, wobei eine erste Schicht aus einem Kunststoffgewebe und eine zweite Schicht aus einem Fluorkautschuk (FKM) gefertigt ist. Das Kunststoffgewebe ist mit Fasern aus Polyamid 6.6 hergestellt und besitzt eine Reißdehnung von ca. 23% in Kette und Schuss (gemäß DIN EN ISO 13934-1). Die FKM-Schicht besitzt eine Shore-Härte von ca. 60 Shore A. Die aus diesem zweischichtigen Schichtverbund bestehende Membran 11 ist insgesamt ca. 0,3 mm dick. Der thermische Ausdehnungskoeffizient beträgt ca. -1,0 * 10^-4 [1/K].

Aufgrund des negativen thermischen Ausdehnungskoeffizienten der Membran 11 ist ein Spannen und ein Nachspannen derselben innerhalb der Presse überflüssig. Des Weiteren ergeben sich nach Versuchen der Anmelderin überraschend bessere Laminierergebnisse in den Randbereichen der Photovoltaikmodule 1, insbesondere wenn diese sowohl auf der Vorderseite als auch auf der Rückseite mit Glasplatten versehen sind.

Die im vorliegenden Ausführungsbeispiel verwendeten Materialien für den Schichtenverbund der Membran 11 sind schließlich gegenüber den beim Laminieren von üblichen Photovoltaikmodulen 1 entstehenden Prozessgasen chemisch beständig, woraus hohe Standzeiten resultieren.

## Patentansprüche

1. Membran für eine Presse zum Laminieren von Photovoltaikmodulen unter Druck- und Wärmeeinwirkung, bestehend aus einem Schichtenverbund mit biegeweichen Eigenschaften, der mindestens eine erste Schicht aus einem Gewebe sowie eine zweite, gasdichte Schicht enthält,
**dadurch gekennzeichnet,**
**dass** der Schichtenverbund einen negativen thermischen Ausdehnungskoeffizienten aufweist.

2. Membran nach Anspruch 1,
**dadurch gekennzeichnet,**
**dass** der Schichtenverbund zugstabile und hierdurch quasi-unelastische Eigenschaften aufweist.

3. Membran nach Anspruch 2,
**dadurch gekennzeichnet,**
**dass** der Schichtenverbund eine Reißdehnung von unter 60%, vorzugsweise unter 50%, besonders bevorzugt unter 25% aufweist.

4. Membran nach mindestens einem der Ansprüche 1 bis 3,
**dadurch gekennzeichnet,**
**dass** das Gewebe beidseits mit einer gasdichten Schicht versehen ist.

5. Membran nach mindestens einem der Ansprüche 1 bis 4,
**dadurch gekennzeichnet,**
**dass** das Gewebe aus Polyamidfasern gefertigt ist.

6. Membran nach mindestens einem der Ansprüche 1 bis 5,
**dadurch gekennzeichnet,**
**dass** die gasdichte zweite Schicht des Schichtverbunds aus Fluorkautschuk (FKM) besteht.

7. Membran nach mindestens einem der Ansprüche 1 bis 6,
**dadurch gekennzeichnet,**
**dass** der Schichtverbund eine Materialstärke von weniger als 1 mm, vorzugsweise von weniger als 0,3 mm besitzt.

8. Membran nach mindestens einem der Ansprüche 1 bis 7,
**dadurch gekennzeichnet,**
**dass** der negative thermische Ausdehnungskoeffizient zwischen -0,5 * 10^-4 und -1,5 * 10^-4 [1/K], vorzugsweise ca. -1,0 * 10^-4 bis ca. -1,1 * 10^-4 [1/K] beträgt.

9. Presse zum Laminieren von Photovoltaikmodulen unter Druck- und Wärmeeinwirkung, mit einer unteren Pressenhälfte (2) und einer oberen Pressenhälfte (3), welche relativ zueinander bewegbar sind, um die Presse zu öffnen und zu schließen, wobei die untere Pressenhälfte (2) und die obere Pressenhälfte (3) mittels umlaufender, ein- oder mehrteiliger Dichtungen (12, 13) im geschlossenen Zustand eine Vakuumkammer (14) bilden, und mit einer Membran (11), die die Vakuumkammer (14) in einen zur Aufnahme von mindestens einem Photovoltaikmodul (1) vorgesehenen, evakuierbaren Produktraum (16) und einen evakuierbaren und/oder druckbeaufschlagbaren Druckraum (17) unterteilt, wobei die Membran (11) so ausgestaltet und angeordnet ist, dass sie aufgrund eines durch Evakuieren des Produktraums (16) und/oder durch Druckbeaufschlagen des Druckraums (17) erzeugten Druckunterschieds in der Vakuumkammer (14) das Photovoltaikmodul (1) direkt oder indirekt gegen eine Unterseite (2) der Vakuumkammer (14) presst,
**dadurch gekennzeichnet,**
**dass** die Membran (11) eine Membran nach mindestens einem der Ansprüche 1 bis 8 ist.

10. Presse nach Anspruch 9,
**dadurch gekennzeichnet,**
**dass** die Membran (11) ohne Spanneinrichtungen in die obere Pressenhälfte (3) eingehängt ist.

11. Presse nach Anspruch 10,
**dadurch gekennzeichnet,**
**dass** die Membran (11) nur an zwei gegenüberliegenden Seiten in die obere Pressenhälfte (3) eingehängt ist.

12. Presse nach Anspruch 9,
**dadurch gekennzeichnet,**
**dass** die Membran (11) zwischen einer oberen Hälfte und einer unteren Hälfte eines zweiteiligen Membranrahmens (10) befestigt ist, der in die obere Pressenhälfte (3) einsetzbar ist.
